# EUROPEAN PATENT SPECIFICATION

(11) **EP 2 848 599 B1**
(45) Date of publication and mention of the grant of the patent: **10.07.2019**
(21) Application number: 13184096.9
(22) Date of filing: 12.09.2013
(51) Int. Cl.: C04B 35/80, C04B 35/622, C04B 35/63

(54) **METHOD FOR THE PRODUCTION OF AN OXIDE CERAMIC COMPOSITE MATERIAL AND FIBER PREFORM**
METHODE ZUR HERSTELLUNG EINES OXIDKERAMISCHEN VERBUNDMATERIALS UND EINER FASERVORFORM
MÉTHODE POUR LA PRODUCTION D'UN MATÉRIAU COMPOSITE DE CÉRAMIQUE D'OXYDE ET PRÉFORME DE FIBRES

(43) Date of publication of application: 18.03.2015
(73) Proprietor: Wamser, Thomas, 97956 Werbach (DE); Scheler, Sven, 95448 Bayreuth (DE); Krenkel, Walter, 95445 Bayreuth (DE)
(72) Inventor: Wamser, Thomas, 97956 Werbach (DE); Scheler, Sven, 95448 Bayreuth (DE); Krenkel, Walter, 95445 Bayreuth (DE)
(74) Representative: Vossius & Partner Patentanwälte Rechtsanwälte mbB

(56) References cited:
- EP-A1- 0 704 414
- EP-A2- 1 084 997
- US-A1- 2004 234 428
- US-A1- 2006 280 940

## Description

The present invention is concerned with oxide ceramic matrix composites reinforced by oxide ceramic fibers. In this context, the invention provides a process for the preparation of fiber preforms for the composites which contain oxide ceramic fiber bundles bonded together by a binder, as well as a process for the preparation of oxide ceramic matrix composites containing the fiber bundles, which use oxide ceramic short fibers.

Monolithic ceramic materials provide useful characteristics due to their hardness and their resistance against heat and against chemicals, but have the disadvantage that they tend to be brittle. Ductile or quasi-ductile break characteristics can be achieved in oxide ceramic fiber reinforced materials due to the combination of fibers, including oxide ceramic fibers, in an oxide ceramic matrix. As oxide ceramic fiber materials for such composites, continuous fiber bundles, also referred to as continuous fiber rovings, have been used alone or in combination with short fibers (e.g. EP 1 645 410 A2, EP 1 084 997 A2 or DE 10 2010 055 221 A1). The matrix is generally synthesized via infiltration of continuous fiber bundles with ceramic slurries, followed by the winding and/or the lamination of the infiltrated fiber bundles to yield a desired shape. Alternatively, continuous fibers are processed by procedures such as weaving or braiding to provide textile structures which can be infiltrated in a subsequent step.

A disadvantage of composite materials reinforced by continuous fibers is the pronounced anisotropy of the composite characteristics, caused by the fiber architecture. Moreover, limitations are imposed on the obtainable geometries. Composites containing laminated and wound fibers provide a two-dimensional reinforcement architecture. Similarly, the use of fiber preforms produced by braiding or weaving procedures also allows the provision of a fiber architecture responding to characteristic load or stress profiles only to a very limited extent. Problems in this respect result in particular from the limited processability of oxide ceramic continuous fibers caused by their brittleness. During processing, fibers tend to break at a small bend radius. Therefore, the geometry of fiber preforms containing continuous fibers is also limited.

In composite materials containing short fibers, the anisotropy of the fiber architecture can be significantly reduced, and fiber preform geometries can be provided which show a complex shape, which are thick walled, and/or which have a shape specifically adapted to the load to which the final composite will be exposed.

However, the preparation of short fiber reinforced oxide ceramic composites having a continuously high volume content of fibers is a challenging task, because a process suitable to combine short fiber bundles with ceramic slurries to provide a short fiber reinforced oxide ceramic matrix had not been available. If chopped fiber bundles are infiltrated with a ceramic slurry, a fiber pulp is formed, which cannot be processed into a composite material having a homogeneously high fiber content. This is due to the fact that the fiber bundles in contact with a ceramic slurry having a high content of ceramic particles swell, get entangled and form a mass of single fibers. On the other hand, a ceramic slurry with a sufficiently reduced content of ceramic particles so as not to affect the integrity of the fiber bundles cannot be used since a critical solid content has to be exceeded to provide a sufficiently strong matrix.

On the other hand, a continuous fiber bundle chopped after infiltration with a ceramic slurry does also not lead to the desired result. If the matrix is still a fluid when the bundle is chopped, a fiber pulp will be formed. If the matrix has been solidified after infiltration and before the bundle is chopped, infiltrated, short fiber bundles are obtained which cannot be satisfactorily incorporated into a ceramic matrix to yield a homogeneous composite material having a high volume content of fibers.

Suitable non-woven ceramic oxide fiber structures for the preparation of oxide ceramic composites are also not available, since the non-woven materials have a relatively low basis weight and thus provide a low volume content of fibers in a preform and in a composite.

Thus, an oxide ceramic fiber composite reinforced by oxide ceramic short fiber bundles which provides advantageous break characteristics and a high strength has not yet been successfully prepared.

The inventors have found that an oxide ceramic fiber preform suitable for the preparation of a high strength oxide ceramic composite material can be provided by arranging short oxide ceramic fiber bundles in a desired shape, infiltrating the fiber bundles with a low viscosity liquid binder composition, compacting the arranged fiber bundles and allowing the binder composition to solidify and to adhere the fiber bundles to each other. In this way, the fiber bundles stay intact and stabilize each other in the obtained preform, such that the preform can be infiltrated with a ceramic slurry while the fiber bundle structure and the high volume content of fibers resulting from the bundle structure is not negatively affected. Due to the low viscosity of the liquid binder composition, the amount of binder applied to the fiber bundles can be controlled at a low level, which further facilitates the provision of compact fiber bundle preforms with a high volume content of fibers. Moreover, due to the retention of the fiber bundle structure in the preform, channels are provided which facilitate the infiltration of the ceramic slurry via capillary forces.

The short fiber bundles allow the fiber architecture to be more flexibly selected, such that e.g. fiber preforms and oxide ceramic composite materials with complex shapes can be produced while elaborate procedures as they are established for the assembly of continuous fiber structures, such as braiding, weaving or laminating of fiber bundles are not necessary. Due to the possibility of arranging the short fiber bundles in ordered or in random orientation, fiber preforms and oxide ceramic composite materials can be purposively provided with regions of isotropic or more or less pronounced anisotropic characteristics.

To that extent, the invention relates, in accordance with a first aspect, to a process for the production of an oxide ceramic fiber preform, comprising the steps of:
a1) arranging a plurality of oxide ceramic fiber bundles with a length of 3 to 70 mm in a desired shape;
b1) infiltrating the fiber bundles with a liquid binder composition having a viscosity of 1 to 100 mPa·s;
c1) compacting the arrangement of fiber bundles;
d1) allowing the liquid binder composition infiltrated into the arrangement of fiber bundles to form bonds between the fiber bundles while the arrangement is kept in a compacted state to obtain an oxide ceramic fiber preform containing a plurality of oxide ceramic fiber bundles bonded together by a binder.

The oxide ceramic fiber preform which is obtainable by the process for the production of an oxide ceramic fiber preform in accordance with the invention comprises a plurality of oxide ceramic fiber bundles with a length of 3 to 70 mm bonded together by a binder.

In a further aspect, the invention relates to a process for the production of an oxide ceramic matrix composite material comprising the steps of:
a2) providing an oxide ceramic fiber preform using the process for the production of an oxide ceramic fiber preform in accordance with the invention;
b2) infiltrating the oxide ceramic fiber preform with an oxide ceramic slurry; and
c2) drying and sintering the oxide ceramic fiber preform infiltrated with the ceramic slurry to obtain an oxide ceramic matrix composite material containing a plurality of oxide ceramic fiber bundles with a length of 3 to 70 mm incorporated into an oxide ceramic matrix.

The oxide ceramic matrix composite material which is prepared by the process in accordance with the present invention comprises a plurality of oxide ceramic fiber bundles with a length of 3 to 70 mm incorporated into an oxide ceramic matrix.

Oxide ceramic fiber bundles (also referred to as fiber rovings) for use in the present invention are commercially available, or can be prepared e.g. by combining oxide ceramic fibers using a sizing agent to form a bundle of fibers. Oxide ceramic fiber bundles are available at defined lengths. In addition, they can be conveniently obtained at any desired length by chopping bundles of continuous oxide ceramic fibers.

Typically, fiber bundles for use in the context of the present invention contain 100 or more single fibers (also referred to as fiber filaments) per bundle. Preferably, they contain 300 or more, and more preferably 500 or more single fibers. The maximum number of single fibers per bundle is not specifically limited as far as the fiber bundles can be conveniently prepared and handled. For example, fiber bundles with a maximum number of single fibers of 20,000 can be used, but maximum numbers of 10,000 or even 5,000 single fibers per bundle are generally sufficient in the practice of the invention. Thus, preferred are fiber bundles containing 100 to 10,000 single fibers, in particular 500 to 5,000. In accordance with the common understanding in the art, the term "fiber bundle" refers in the context of the invention to a combination of single fibers or filaments with their long axis extending side-by-side. Generally, single fibers within the fiber bundle are not intertwined with their neighboring fibers, e.g. by weaving, braiding or other forms of entanglement. However, the bundle as a whole may be twisted. Typically, the single fibers in the fiber bundle have the same length. Generally, the single fibers are arranged in the bundle such that the bundle is provided with a substantially planar cross sectional area at the beginning and at the end of the bundle as a result of the preparation by chopping continuous fiber bundles.

The oxide ceramic single fibers forming the fiber bundles typically have a diameter of 5 µm or more, preferably 10 µm or more. Generally, the diameter is 30 µm or less, more preferably 20 µm or less and in particular 15 µm or less. Thus, single fibers with a diameter of 10 to 20 µm are particularly preferred to provide the fiber bundles for use in the context of the invention.

The length of the oxide ceramic fiber bundles for use in the present invention is 3 to 70 mm. Preferably, they have a length of 5 mm or more, and in particular of 10 mm or more. Preferably, bundles with a length of 50 mm or less, more preferably with a length of 30 mm or less are used. For convenience sake, the oxide ceramic fiber bundles of this length will also be referred to as "short fiber bundles" herein.

The aspect ratio of the fiber bundles, i.e. the ratio of the length of the fiber bundle to the diameter of its cross-section, is preferably 3 or more, more preferably 5 or more. In the case of a fiber bundle having a non-circular, e.g. elliptic cross-section, the aspect ratio is calculated using the largest diameter of its cross-section.

Thus, in accordance with a preferred embodiment of the invention, oxide ceramic fiber bundles are used for the formation of the oxide ceramic fiber preform and/or the oxide ceramic composite material which have a length of 3 to 70 mm, preferably 5 to 50 mm, and contain 100 or more, preferably 300 or more, single fibers with a diameter of 5 to 30 µm, preferably 10 to 20 µm.

Dimensions in the millimeter range, such as the length of the fiber bundles, can be directly measured. Dimensions in the micrometer range, such as the diameter of the fibers can be conveniently determined from a micrograph, e.g. taken by an electron microscope, of the concerned structure.

As noted above, the oxide ceramic fiber bundles contain oxide ceramic single fibers. Typically, they contain no other fiber constituents apart from oxide ceramic single fibers. The oxide ceramic single fibers contain an oxide ceramic material. Generally, their content of the oxide ceramic material is 90 % by weight or more, preferably 95 % by weight or more, based on the total weight of the single fibers, and typically the oxide ceramic single fibers consist of an oxide ceramic material.

Typically, the oxide ceramic material contained in the oxide ceramic single fibers comprises an oxide selected from Al₂O₃, SiO₂, ZrO₂, Y₂O₃ or a combination thereof. Preferably, the oxide or the combination of oxides is contained in the oxide ceramic single fibers in an amount of 90 % by weight or more, more preferably 95 % by weight or more, based on the total weight of the single fibers, or the single fibers consist of an oxide selected from Al₂O₃, SiO₂, ZrO₂, Y₂O₃ and a combination thereof.

Preferred oxide ceramic single fibers are formed from an oxide ceramic material selected from Al₂O₃, an alumosilicate such as mullite, ZrO₂, ZrO₂ stabilized by Y₂O₃, or yttrium-aluminium-garnet (YAG). More preferred are Al₂O₃, mullite, and ZrO₂. If the oxide ceramic single fibers are formed from such a material, the content thereof in the ceramic fibers is generally 90 % by weight or more, more preferably 95 % by weight or more, based on the total weight of the single fibers, or the single fibers consist of the oxide ceramic material.

In addition to the oxide ceramic single fibers, the oxide ceramic fiber bundles for use in the context of the present invention may comprise e.g. a sizing agent, or a binder or binder composition as it is used in the process in accordance with the invention, as it will be described in further detail below. Typically, the fiber bundles used in the process for the production of an oxide ceramic fiber preform in accordance with the invention, prior to being infiltrated with the liquid binder composition, contain 90 % by weight or more, more preferably 95 % by weight or more, of the oxide ceramic single fibers on the total weight of the fiber bundles. It is further preferred that they consist of the oxide ceramic single fibers and a sizing agent. It will be understood that the constituents of the fiber bundles may change between the fiber bundles as used as a starting material, the fiber bundles contained in the preform and the fiber bundles contained in the oxide ceramic composite material. For example, the short fiber bundles used a starting material in step a1) of the process for the production of an oxide ceramic fiber preform preferably contain a sizing agent (such as polyvinyl alcohol (PVA), typically present in an amount of 1 - 5 % by weight, and preferably 3 % by weight, based on the weight of the oxide ceramic fiber bundles), which is later burned off prior to or during the sintering of the oxide ceramic matrix. Such a sizing agent is useful to facilitate the handling of the short fiber bundles. Similarly, during the formation of the fiber preform, the fiber bundles are infiltrated with a binder composition. Depending on the composition thereof (to be discussed below), the binder may be retained in the fiber bundles of the oxide ceramic matrix composite material, or may be partially burned off prior to or during the sintering of the oxide ceramic matrix.

Different types of oxide ceramic single fibers may be contained in a fiber bundle, e.g. formed from different types of oxide ceramic materials, or having different diameters. However, in terms of their production or availability, the use of fiber bundles combining single fibers of the same type is generally more convenient.

Similarly, different types of fiber bundles, which differ, e.g., with regard to the oxide ceramic material of the single fibers contained therein, with regard to their length, with regard to the number of single fibers, and/or with regard to the diameter of the single fibers, may be combined to provide the preform in accordance with the invention.

In step a1) of the process for the production of an oxide ceramic fiber preform in accordance with the invention, a plurality of the short fiber bundles are arranged in a desired shape. The total number of the short fiber bundles depends mainly on the intended dimensions of the preform, and is not particularly limited. However, in order to fully benefit from the advantages provided by the presence of the short fiber bundles, preferably 20 or more, more preferably 50 or more of the short fiber bundles should be contained the preform in accordance with the invention. Generally, a sufficient amount of short fiber bundles should be used such that any fiber bundle is in contact with more than one neighboring fiber bundles.

Similarly, in order to fully benefit from the advantages provided by the presence of the short fiber bundles, the preform in accordance with the invention should preferably have at least one dimension which is significantly longer than the length of the short fiber bundles contained therein, and which is e.g. 2 cm or more.

The method for arranging the short fiber bundles in a desired shape is not particularly limited. For example, depending on whether an oriented or a less oriented arrangement of the fiber bundles is desired, the short fiber bundles can be placed onto a support or into a mold in an oriented manner or can be poured or dropped as a bulk of fiber bundles onto a support or into a mold. In order to support a random orientation, it is conceivable to move the vessel from which the fiber bundles are dropped in a rotating manner, or to rotate the support or the mold while the fibers are put in place. A further alternative is the use of a fiber spraying process to spray short fiber bundles into a mold, as it is known e.g. from the formation of glass fiber reinforced composites. Preferably, the fibers are arranged in step a1) in a mold which has the desired shape.

If the fibers are arranged on a support or in a mold, the support or the mold is preferably perforated to allow a convenient infiltration of the fiber bundles after they have been arranged in the desired shape. For example, a sieve may provide a useful mold for this purpose. It will be understood that the mesh size of the sieve should be smaller than the length of the short fiber bundles. For example, the mesh size can be 1 or 2 mm.

In order to provide a preform, and eventually an oxide ceramic matrix composite with reduced anisotropy, the short fiber bundles can be arranged in step a1) in an at least two dimensional random orientation of their long axis. If the fiber bundles are dropped onto a support or into a mold, the fibers will tend to align their long axis parallel to the plane provided by the surface of the support or the mold, such that a strictly random orientation may be difficult to achieve. On the other hand, within this plane, the fiber bundles can achieve the two-dimensional random orientation. Alternatively, it may be desired to arrange the fiber bundles in an oriented manner in the preform in accordance with the invention in order to purposively achieve anisotropic characteristics, e.g. to allow the perform, and eventually the oxide ceramic matrix composite, to withstand unidirectional stress. However, it is also possible to combine in a preform one or more regions wherein the oxide ceramic fiber bundles show an at least two-dimensional random orientation of their long axis, and one or more regions wherein the short fiber bundles are arranged in an oriented manner.

It is generally preferred that the short fiber bundles are arranged in a desired shape while they are in a dry state.

Moreover, it is preferred that the infiltration of the fiber bundles with the liquid binder composition of step b1) is carried out after step a1), i.e. that the fiber bundles arranged in a desired shape are infiltrated with the liquid binder composition.

In step b1), the fiber bundles are infiltrated with a liquid binder composition. The liquid binder composition includes binders or binder precursors which are liquid as such, as well as solutions or dispersions of a binder or a binder precursor in a solvent. Preferably, the liquid binder composition is a solution of a binder or a binder precursor in a suitable solvent, a suspension of binder particles or binder precursor particles in a solvent, or a combination of the two. In the following, both the dissolved binder and the suspended binder particles will be commonly referred to as "binder", and the dissolved binder precursor and the suspended binder precursor particles will be commonly referred to as "binder precursor".

The binder should be one which is able to bond oxide ceramic fibers together. Thus, it can fulfill two main functions in the oxide ceramic fiber preform in accordance with the invention, i.e. (i) to bond the fibers in the short fiber bundles together to ensure the integrity of the short fiber bundles during the further procedures, in particular during the infiltration of the preform with a ceramic slurry during the formation of the oxide ceramic matrix composite material in accordance with the invention; and
(ii) to bond the short fiber bundles together to ensure that the fiber bundles are retained in a compacted, desired shape while being infiltrated with a ceramic slurry during the formation of the oxide ceramic matrix composite material in accordance with the invention.

To that extent, it will be understood by the skilled reader that the binder composition generally includes a binder or a precursor of a binder forming a bond between oxide ceramic fibers which cannot be released by exposure to the solvent of the ceramic slurry.

The binder composition typically contains a polymeric organic binder or a precursor thereof, a ceramic binder or a precursor thereof, or a combination of polymeric organic binder or a precursor thereof and a ceramic binder or a precursor thereof. Suitable polymeric organic binders include polyvinyl alcohol or polyvinyl pyrrolidone, which may be formulated as solutions in water as a solvent. Suitable precursors of polymeric organic binders include monomers which may be formulated as solutions in organic solvents. Suitable ceramic binders include oxide ceramic nanoparticles, e.g. nanoparticles containing an oxide selected from Al₂O₃, SiO₂, ZrO₂, Y₂O₃, or a combination thereof. Preferred as ceramic oxide nanoparticles are nanoparticles formed from Al₂O₃, yttrium-aluminium garnet, ZrO₂, an alumosilicate including mullite, an yttrium silicate, or a zirconia silicate. The nanoparticles are generally particles in the size range of 10 nm to 500 nm, preferably in the range of 10 to 50 nm (as determined by laser diffraction). They act as a binder due to their capability of sintering to the oxide ceramic fibers, preferably at temperatures < 1000 °C, preferably < 900 °C. The nanoparticles can be formulated as suspensions in a solvent, conveniently in water. Suitable precursors of a ceramic binder include metal compounds which form metal oxides during a temperature treatment at temperatures < 1000 °C, preferably < 900 °C. Examples of such precursors are metal alkoxides, e.g. aluminium or zirconium alkoxides, and in particular aluminium or zirconium butoxide, or metal hydroxides or chlorides, such as aluminium hydroxide. The precursors can also be formulated as solutions or suspensions in a solvent.

Liquid binder formulations having a sufficiently low viscosity can be conveniently provided if the content of the binder or binder precursor does not exceed 10 % by weight, calculated as the ratio of the weight of the binder or binder precursor to the total weight of the liquid binder formulation, which is thus preferred. More preferably, the content of the binder or binder precursor in the liquid formulation does not exceed 5 % by weight. It has been found by the present inventors that the infiltration of the short fiber bundles with such diluted liquid binder compositions allows the formation of sufficiently strong bonds between the ceramic oxide fibers and the short fiber bundles to provide a stable preform which is able to withstand the infiltration with a ceramic slurry. At the same time, a low binder content allows the formation of a compact precursor structure with a high fiber content per volume. Typically, the liquid binder compositions with such a low content of the binder or binder precursor do not give rise to the formation of a continuous binder coating covering the oxide ceramic fibers contained in the short fiber bundles. Rather, the binder or binder precursor contained in the liquid binder composition tends to form bonds in a pointwise manner, especially at points of contact between fibers and fiber bundles, respectively.

In view of the desired stability of the bonds formed between the fibers, it is preferred that the liquid binder composition comprises a ceramic binder or a precursor of a ceramic binder. It is more preferred that the liquid binder composition comprises a combination of a ceramic binder or binder precursor with a polymeric organic binder or binder precursor. Such a combination is particularly suitable since the polymeric organic binder is able to provide initial stability after the solidification of the liquid binder composition, and facilitates the handling of the preform, e.g. when it is transferred into a furnace for a heat treatment. During a subsequent heat treatment, the organic binder can be burned off while the ceramic binder or binder precursor forms stable bonds between the oxide ceramic fibers and the short fiber bundles, respectively. Such bonds cannot be released by exposure to the solvent of the ceramic slurry.

During the step b1) of infiltrating the short fiber bundles with the liquid binder composition, the viscosity of the liquid binder composition ranges from 1 to 100 mPa·s. Thus, it can be ensured that the fiber bundles are well infiltrated by the binder composition. The viscosity can be determined in this context using a coaxial cylinder viscometer at a shear rate of 1 s⁻¹. The temperature at which the measurement is carried out is the temperature at which the infiltration of step b1) is carried out. It is to be noted that the liquid binder composition does not necessarily have to be infiltrated at room temperature. For example, if a binder composition is used which achieves a viscosity in the above range at a temperature above room temperature, it is also possible to carry out step b1) at such a temperature. However, conveniently and preferably a liquid binder composition is used which has a viscosity in the range from 1 to 100 mPa·s at 23 °C, which can be determined using a coaxial cylinder viscometer at a shear rate of 1 s⁻¹.

The liquid binder composition can be contacted with the short fiber bundles in a variety of ways during the step b1) of infiltrating the fiber bundles with the liquid binder composition, including pouring or spraying the liquid binder composition onto the fiber bundles, or immersing the fiber bundles in the liquid binder composition. Preferably, the fiber bundles, or more preferably the arrangement of fiber bundles obtained in step a1) is immersed in the liquid binder composition. Conveniently, immersing the arrangement of fiber bundles can be accomplished on a perforated support or in a perforated mold such as a sieve, and it is particularly preferred to use in step a1) such a perforated support or a perforated mold to arrange the fiber bundles and to retain the arranged fiber bundles in step b1) on this support or in this mold while immersing them in a liquid binder composition.

Preferably, the process for the production of an oxide ceramic fiber preform comprises a further step of removing liquid binder composition not adhering to the fiber bundles. This may be accomplished, e.g. by simply keeping the fiber bundles and in particular the arrangement of fiber bundles obtained in step a1) in a position in which excess binder composition can drip off the fiber bundles and/or flow away from the fiber bundles. The removal may be supported by the application of pressure, e.g. in the step of compacting the arrangement of fiber bundles in step c1), or by other means, such as centrifugal forces, or shaking. Thus, the step of removing liquid binder composition not adhering to the fiber bundles may be carried out, e.g. between steps b1) and c1) or as a part of step c1). Conveniently, this step may be carried out while the arrangement of short fiber bundles is present on a perforated support or in a perforated mold, such as a sieve, and in particular while it is retained on the perforated support or in the perforated mold wherein step b1) is preferably carried out.

Step c1) of compacting the arrangement of the short fiber bundles is preferably carried out after step b1). The compacting of the arrangement of fiber bundles can be carried out by applying pressure to the arrangement, e.g. while the short fibers are held on a support or placed in a mold. For example, a plate or a die which may be adapted in shape to the mold can be pressed onto the arrangement of fibers, or a mold with a variable volume can be used. However, depending on the method used in step a1) for arranging the short fiber bundles, a compacted arrangement may be directly result in step a1). For example, if a process of fiber spraying is used in step a1), the pressure inherent to this process can be sufficient to arrange and compact the fibers.

Also in step c1), a perforated support or a perforated mold is preferably used, which allows a convenient removal of liquid binder composition not adhering to the fiber bundles. In order to keep the production process simple, the support or the mold is preferably also used in step a1) and b1).

It will be understood that it is not necessary to apply high pressures during the step of compacting the arrangement of fiber bundles. As an orientation, the volume content of oxide ceramic fibers in the fiber perform resulting from the process of the invention can be used. As discussed in further detail below, this volume content preferably ranges from 20 to 60 % by volume, based on the total volume of the preform.

In step d1), the liquid binder composition infiltrated into the arrangement of fiber bundles is allowed to form bonds between the fiber bundles while the arrangement is kept in a compacted state. Thus, an oxide ceramic fiber preform is obtained which contains a plurality of the short fiber bundles bonded together by a binder.

As will be understood, the formation of bonds between the fiber bundles involves the removal of solvent of the liquid binder composition in cases where such a solvent is present, typically via solvent evaporation, such that a solid binder bonds the short fiber bundles in the precursor. Moreover, in cases where a binder precursor is used which is transformed into the actual binder, e.g. via a reaction between reactive monomers or via the formation of a ceramic binder from a precursor thereof, the formation of bonds involves the transformation of the binder precursor to the binder. Typically, the formation of bonds by the binder composition is accomplished via a heat treatment in step d1). As will be understood, this heat treatment can be adapted to the type of binder or binder precursor used. Generally, the heat treatment comprises a step of removing the solvent contained in the liquid binder composition via evaporation, which is typically carried out at or above the boiling point of the solvent used, e.g. at 100 to 200 °C, preferably 100 to 150 °C. If the binder composition contains a polymeric organic binder or a precursor thereof, such as polyvinyl alcohol or polyvinyl pyrrolidone, the organic polymeric binder can keep the arrangement of fibers in a compacted form after the solvent has been removed. If a ceramic binder or a precursor thereof is contained in the liquid binder composition, the heat treatment generally comprises a step of heating the arrangement of short fiber bundles to a temperature where the ceramic binder can form a bond between oxide ceramic fibers and where any organic binder that may be additionally contained is burned off. This step is typically carried out at temperatures in the range of 300 to < 1000 °C, preferably 600 to 900 °C. Thus, since a preferred liquid binder composition for use in the present invention comprises a ceramic binder or a precursor thereof in a solvent, optionally together with a polymeric organic binder or a precursor thereof the formation of bonds preferably involves an initial heat treatment to remove the solvent and optionally to solidify the polymeric organic binder, e.g. at 100 to 200 °C, preferably 100 to 150 °C, and a subsequent heat treatment to form bonds by the ceramic binder, e.g. at temperatures in the range of 300 to < 1000 °C, preferably 600 to 900 °C.

As noted above, the compacting in step c1) is preferably carried out on a support or in a mold, particularly a perforated support or mold. It is also preferred that step d1) is carried out on such a support or in a mold, preferably and conveniently the same support or mold also used in step c1). However, it will be understood that the arrangement of fiber bundles can be removed from the support or the mold, if desired, once bonds have been formed between the fiber bundles. Thus, if a combination of a polymeric organic binder and a ceramic binder is used for the formation of bonds, it is possible to remove the arrangement of fiber bundles from the support or the mold after the solidification of the polymeric organic binder, to transfer it to a furnace for the further heat treatment.

After the bonds have been formed between the short fiber bundles in step d1), the resulting product may be used as a preform for the formation of an oxide ceramic matrix composite as it is. Optionally, the product containing the bonded fiber bundles may still be shaped, if necessary, e.g. by cutting, bending, folding or punching. It is also possible to laminate preform using lamination processes known for fiber fabrics.

From the above, it will be understood that the preferred process for the production of an oxide ceramic fiber preform in accordance with the invention comprises steps a1), b1), c1) and d1) carried out in this order, i.e. in step b1) the fiber bundles which are arranged in a desired shape are infiltrated with the liquid binder composition, and in step c1) the arrangement of fiber bundles infiltrated with the liquid binder composition is compacted. More preferably, a step of removing liquid binder composition not adhering to the fiber bundles is further contained, e.g. prior to or during step c1).

Also in line with the above, the particularly preferred way of carrying out the process for the production of an oxide ceramic fiber preform in accordance with the invention can be summarized as comprising the steps of
a1) arranging a plurality of oxide ceramic fiber bundles with a length of 3 to 70 mm in a desired shape on a perforated support or in a perforated mold;
b1) infiltrating the fiber bundles arranged in a desired shape on the perforated support or in the perforated mold with a liquid binder composition having a viscosity of 1 to 100 mPa·s;
c1) compacting the arrangement of fiber bundles infiltrated with the liquid binder composition on the perforated support or in the perforated mold and removing liquid binder composition not adhering to the fiber bundles; and
d1) allowing the liquid binder composition infiltrated into the arrangement of fiber bundles to form bonds between the fiber bundles while the arrangement is kept in a compacted state to obtain an oxide ceramic fiber preform containing a plurality of oxide ceramic fiber bundles bonded together by a binder.

In accordance with the common understanding in the art, the term "preform" is used in the context of the invention to indicate that the concerned product containing oxide ceramic fibers in the form of fiber bundles is particularly suitable and intended to be processed into a oxide ceramic matrix composite material, and that the shape of the preform defines the general form in which this composite material is obtained.

The oxide ceramic fiber preform prepared in accordance with the invention preferably contains 90 % by weight or more of oxide ceramic material provided by the oxide ceramic fibers contained in the short fiber bundles, more preferably 95 % by weight or more, and in particular 98 % by weight. Moreover, it preferably contains 5 % by weight or less, preferably 2 % by weight or less, and preferably 0.1 % by weight or more, more preferably 0.5 % by weight or more, of a binder. The oxide ceramic fiber preform may consist of the oxide ceramic material provided by the oxide ceramic fibers and the binder. These percentages are based on the total weight of the preform.

Moreover, the oxide ceramic fiber preform prepared in accordance with the invention preferably has a content of oxide ceramic fibers of 20 % by volume or more, more preferably 25 % or more, and in particular 30 % or more, based on the total volume of the preform. Typically, the fiber content is 60 % by volume or less, and 40 % by volume or less are generally sufficient to prepare a composite material with a high strength. The volume content of the oxide ceramic fibers can be calculated based on the mass and the density of the oxide ceramic material used in the preform, and on the mass and the volume of the preform as defined by its outer dimensions. The contribution of the binder to the mass of the preform is generally sufficiently small to be left out of consideration in this calculation. If the outer dimensions of the preform should be difficult to determine, they can be appropriately estimated by relying on the outer dimensions of an oxide ceramic matrix composite obtained from the preform in accordance with the procedures further discussed below.

It will be understood that the preform prepared in accordance with the invention does not need to contain any fiber bundles or fibers with a length of more than 70 mm. While such fibers can be contained as long as they do not interfere with the procedures of the present invention, it is preferred that the fiber preform in accordance with the invention is essentially free, or is free from any fibers with a length of more than 70 mm. In this context, essentially free means that any such fibers do not provide any significant contribution to the strength of the fiber architecture.

The oxide ceramic fiber preform prepared in accordance with the invention can be provided in a variety of shapes, including a sheet, a hollow container or a tube. Preferably, the thickness of the sheet, or the wall thickness of the hollow container or the tube, is in the range of 1 to 25 mm, more preferably in the range of 1 to 20 mm, and in particular in the range of 2 to 10 mm.

As noted above, a further aspect of the invention concerns a process for the production of an oxide ceramic matrix composite material comprising the steps of:
a2) providing an oxide ceramic fiber preform using the process for the production of an oxide ceramic fiber preform in accordance with the invention;
b2) infiltrating the oxide ceramic fiber preform with an oxide ceramic slurry; and
c2) drying and sintering the oxide ceramic fiber preform infiltrated with the ceramic slurry to obtain an oxide ceramic matrix composite material containing a plurality of oxide ceramic fiber bundles with a length of 3 to 70 mm incorporated into an oxide ceramic matrix.

For providing the oxide ceramic preform in step a2), the process of the invention is used including all the preferred embodiments thereof taught above. Thus, with respect to details of this step reference is made to the discussion in the preceding sections of the specification. As noted above, the preform obtained in step d1) can be further shaped, if necessary, e.g. by cutting, bending, folding or punching, or preforms can be laminated by procedures known in the art prior to the infiltration of the preform with the oxide ceramic slurry.

For step b2) and c2), procedures and an oxide ceramic slurry can be used as they are known for the preparation of oxide ceramic matrix composites reinforced by continuous fibers. Reference can be made in this respect to Krenkel, Walter (Ed.) Ceramic Matrix Composites, Fiber Reinforced Ceramics and their Applications, ISBN 978-3-527-31361-7 - Wiley-VCH, Weinheim, or Krenkel, Walter (Ed.), Keramische Verbundwerkstoffe, ISBN 978-3527305292 Wiley-VCH, Weinheim. Due to the specific constitution of the short fiber bundles in the preform, conventional ceramic slurries can be used to infiltrate the preform without affecting the integrity of the fiber bundles.

Thus, the infiltration of the oxide ceramic fiber preform with the oxide ceramic slurry can be achieved by a variety of methods, including spraying or pouring the slurry onto the preform, or immersing the preform into the slurry, with the latter being preferred.

The solvent to be used in the slurry is not particularly limited, but water as a solvent is generally preferred, e.g. in view of its lack of criticality for the environment. Thus, the slurry is typically an aqueous slurry, i.e. a slurry wherein the liquid phase contains more than 50 % by volume of water, preferably more than 70 % by volume of water based on the total liquid volume of the slurry.

The oxide ceramic material contained in the slurry typically comprises an oxide selected from Al₂O₃, SiO₂, ZrO₂, Y₂O₃, or a combination thereof. Preferably, this oxide or this combination of oxides is contained in the solid content of the ceramic slurry in an amount of 90 % by weight or more, more preferably 95 % by weight or more, based on the total weight of the solid content in the ceramic slurry.

Preferably, the oxide ceramic matrix of the composite is formed from an oxide ceramic material selected from Al₂O₃, an alumosilicate such as mullite, ZrO₂, ZrO₂ stabilized by Y₂O₃, or yttrium-aluminium-garnet (YAG). More preferred are Al₂O₃, mullite, and ZrO₂. If the oxide ceramic matrix is formed from such a material, the content thereof in the solid content of the slurry is generally 90 % by weight or more, more preferably 95 % by weight or more, based on the total weight of the solid content in the ceramic slurry.

The oxide ceramic material is typically contained in the oxide ceramic slurry in the form of particles. Preferably, the particles have an average particle size (volume average, as determined by laser diffraction) of 3 µm or less, more preferably 2 µm or less, and in particular 1 µm or less. Also, it is preferred that the average particle size is 0.1 µm or more. It is also preferred that particles with a particle size of > 25 µm, as determined by laser diffraction, are absent, and more preferred that particles with a particle size of > 15 µm are absent. Ceramic particles of different particle sizes are commercially available. If necessary, the particle size can be adjusted, e.g. by milling.

A particularly preferred oxide ceramic slurry is one wherein the oxide ceramic particles have a bimodal particle size distribution (volumetric fraction vs. particle size, as determined by laser diffraction), showing a peak in the range of 0.05 to 0.3 µm, preferably in the range of 0.08 to 0.2 µm and a peak in the range of 0.7 to 3 µm, preferably in the range of 0.8 to 2 µm. Preferably, the two peaks do not overlap. Moreover, it is preferred that the peak in the range of 0.05 to 0.3 µm, preferably in the range of 0.08 to 0.2 µm accounts for a volumetric fraction of 3 to 25 % by volume, based on the total volume of the particles, and the peak in the range of 0.7 to 3 µm, preferably in the range of 0.8 to 2 µm, accounts of 75 to 97 % by volume. The volumetric fraction of the particles of the respective sizes can be determined, if necessary, from the cumulative amount of particles determined via laser diffraction. However, as a rule these preferred slurries can be conveniently prepared by mixing the desired relative amounts of ceramic particles of the desired size.

The slurry typically has a solid content of ceramic material of 30 % by volume or more, preferably 40 % by volume or more based on the total volume of the slurry.

Apart from the ceramic material, the oxide ceramic slurry may contain additives which facilitate the handling of the slurry, the infiltration into the preform and/or the drying and sintering of the slurry to form an oxide ceramic matrix. Such additives include dispersants, such as polyacrylic acids, and freeze drying agents, such as glycerol, and/or gelatin. Dispersants, if present, are typically added in amounts of up to 2 % by weight, based on the total weight of the solids in the slurry. Glycerol, if present, is added in amounts of up to 25 % by weight, based on the total weight of the liquid phase in the slurry.

In step c2), the oxide ceramic fiber preform infiltrated with the ceramic slurry is dried and sintered. The drying of the slurry can be carried out, e.g., via evaporation of the solvent at temperatures at or above the boiling point of the solvent. However, this process has been found to be less advantageous since the evaporating solvent tends to make it difficult to obtain a homogeneous matrix. Thus, it is preferred to remove the solvent at low temperatures by freeze-drying. In this context, it is helpful to add the freeze-drying additives to the slurry, which prevent ice-crystals from forming in the frozen material.

Sintering of the preform containing the oxide ceramic particles introduced with the ceramic slurry is generally carried out at temperatures of 1000 °C or more, preferably in the range of 1000 to 1400 °C, and particularly in the range of 1100 to 1300 °C.

Optionally, in order to adjust the density and strength of the oxide ceramic matrix composite, a reinfiltration of the composite with a solution or a suspension of a metal oxide precursor, such as metal alkoxides, e.g. aluminium or zirconium alkoxides, and in particular aluminium or zirconium butoxide, or metal hydroxides or chlorides, such as aluminium hydroxide is possible. This reinfiltration is followed by a conversion of the precursor by a heat treatment which is typically carried out in a temperature range of 700 to 1400 °C, preferably 1000 to 1300 °C.

Also in line with the above, the particularly preferred way of carrying out the process for the production of an oxide ceramic matrix composite material in accordance with the invention can be summarized as comprising the steps of
a) arranging a plurality of oxide ceramic fiber bundles with a length of 3 to 70 mm in a desired shape on a perforated support or in a perforated mold;
b) infiltrating the fiber bundles arranged in a desired shape on the perforated support or in the perforated mold with a liquid binder composition having a viscosity of 1 to 100 mPa·s;
c) compacting the arrangement of fiber bundles infiltrated with the liquid binder composition on the perforated support or in the perforated mold and removing liquid binder composition not adhering to the fiber bundles;
d) allowing the liquid binder composition infiltrated into the arrangement of fiber bundles to form bonds between the fiber bundles while the arrangement is kept in a compacted state to obtain an oxide ceramic fiber preform containing a plurality of oxide ceramic fiber bundles bonded together by a binder;
e) infiltrating the oxide ceramic fiber preform with a ceramic slurry; and
f) drying and sintering the oxide ceramic fiber preform infiltrated with the ceramic slurry to obtain an oxide ceramic matrix composite material containing a plurality of oxide ceramic fiber bundles with a length of 3 to 70 mm.

It will be understood that steps a), b), c) and d) in this summary correspond to steps a1), b1), c1) and d1), respectively, discussed in the context of the process for the preparation of the oxide ceramic fiber preform in accordance with the invention, and that the teaching provided with respect to preferred embodiments for steps a1), b1), c1) and d1) above likewise applies for steps a), b), c) and d), respectively. Similarly, it will be understood that steps e) and f) in this summary correspond to steps b2) and c2), respectively, discussed in the context of the process for the preparation of the oxide ceramic matrix composite material in accordance with the invention, and that the teaching provided with respect to preferred embodiments for steps b2) and c2) above likewise applies for steps e) and f), respectively.

The oxide ceramic composite material obtained via the process discussed above, comprises a plurality of oxide ceramic fiber bundles with a length of 3 to 70 mm incorporated into an oxide ceramic matrix. As noted above, the matrix typically comprises an oxide selected from Al₂O₃, SiO₂, ZrO₂, Y₂O₃, or a combination thereof. Preferably, this oxide or this combination of oxides is contained in the matrix in an amount of 90 % by weight or more, more preferably 95 % by weight or more, based on the total weight of the matrix. The matrix may also consist of this oxide or this combination of oxides. Preferably, the oxide ceramic matrix of the composite is formed from an oxide ceramic material selected from Al₂O₃, an alumosilicate such as mullite, ZrO₂, ZrO₂ stabilized by Y₂O₃, or yttrium-aluminium-garnet (YAG). More preferred are Al₂O₃, mullite, and ZrO₂. If the oxide ceramic matrix is formed from such a material, the content thereof in the matrix is generally 90 % by weight or more, more preferably 95 % by weight or more, based on the total weight of the matrix.

In the oxide ceramic composite material prepared in accordance with the present invention, the volume content of the oxide ceramic fibers is essentially the same as in the oxide ceramic fiber preform used in the preparation thereof. Thus, it is preferably 20 % by volume or more, more preferably 25 % or more, and in particular 30 % or more, based on the total volume of the preform. Typically, the fiber content is 60 % by volume or less, and 40 % by volume or less are generally sufficient for a variety of applications. As will be understood, the volume content of fibers can be suitably adjusted by providing a preform having a sufficiently high fiber content, and if necessary by adjusting the amount of short fiber bundles or the degree of compression applied in the production of the preform. The volume content of ceramic fibers can be controlled directly in the oxide ceramic matrix composite e.g. by determining the area ratio of the fibers to the total cross section in a cross section of the composite, preferably as the average area ratio taken for 5 cross sections representative for the whole composite. Scanning electron microscopy is used to obtain the micrographs.

The oxide ceramic matrix composite prepared in accordance with the present invention preferably has an open porosity according to DIN EN 623-2 of 20 % by volume or more, in particular 30 % by volume or more, and 50 % or less, based on the volume of the composite. It is established that a porous matrix is advantageous for the stability of the composite, since a sufficiently porous matrix will prevent cracks formed under stress from being transferred to the reinforcing fibers. The porosity of the matrix can be adjusted, e.g. by using a slurry combining a fraction of coarser and a fraction of finer particles with a bimodal size distribution, and varying the amount or the size of the particles in the respective fractions.

Furthermore, it is preferred that the oxide ceramic matrix composite prepared in accordance with the invention has a three point flexural strength according to DIN EN 658-3 of 50 MPa or more. The flexural strength can be adjusted, e.g. by varying the volume content of the fibers in the composite material.

The oxide ceramic composite material in prepared accordance with the present invention can be used in a variety of applications, e.g. medical applications where inert, stable materials are required, applications where resistance to chemicals is required, or applications where the structural integrity of materials under the influence of heat is an issue. Exemplary applications include medical implants, heat shielding materials for spacecrafts, tubes and housings for furnaces, engine parts, turbine parts (e.g. housings, covers), parts for chemical reactors and for chemical plants.
**Figure 1** provides a schematic illustration of the process for the production of an oxide ceramic fiber preform in accordance with the invention, comprising the steps of arranging the fibers, infiltration with a liquid binder composition, compressing and forming bonds.
**Figure 2** is a photograph of the oxide ceramic fiber preform prepared in Example 1.
**Figure 3** shows a diagram of the flexural strength of the oxide ceramic matrix composite of Example 1 determined accordance to DIN EN 658-3 with a damage tolerant fracture behavior.
**Figure 4** shows a scanning electron micrograph of a polished oxide ceramic matrix composite sample of Example 1

### Example 1

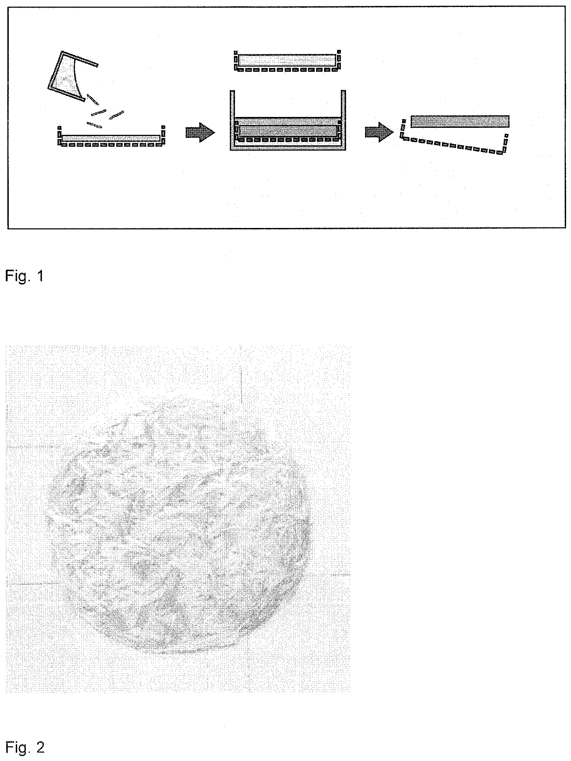

Commercially available short alumina fiber bundles type Nextel™610 (6,35 mm (1/4 inch), 10000 den DC11, supplied by 3M) were used and arranged in a sieve having the shape of the desired preform and a mesh size of 1 mm. Subsequently, the stacked fiber bundles were infiltrated with an aqueous suspension containing 1 wt% of polyvinyl pyrrolidone (Luviskol K 90 (BASF)) and 2 wt% boehmit (Disperal P2 (Sasol)) by immersing the bundles in the suspension. After an immersion time of about 30 s, the arrangement of fibers is taken from the suspension. The infiltrated stack of fiber bundles is pressed, dried at 100 °C and subjected to a heat treatment at 700 °C. Figure 2 shows the preform formed from the fiber bundles after sintering at 700 °C.

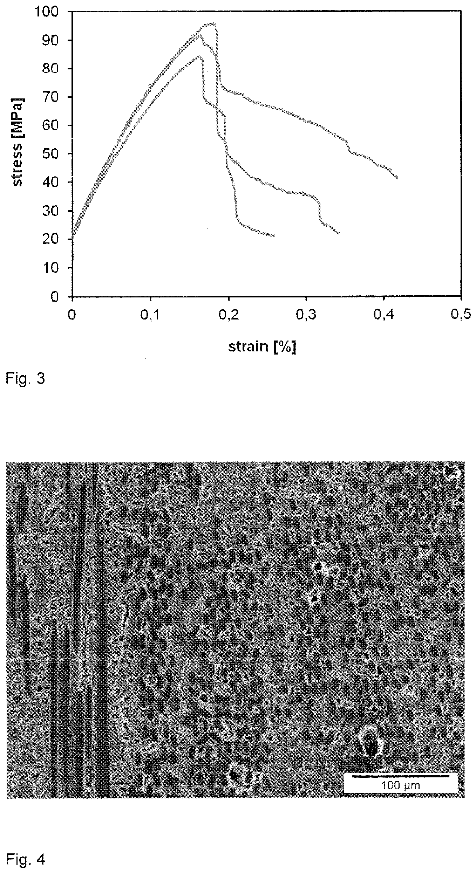

The fiber preform was infiltrated with an aqueous slurry with a particle loading of 73 wt%. The slurry was prepared with Al₂O₃ powder (80 % by volume MRS1, Albemarle, 20 % by volume TM-DAR, supplied from Krahn Chemie), which was incorporated in a solution of 1 wt% dispersant Sokalan PA 15, BASF and 25 wt% glycerol in water. After the infiltration, the fiber preform was placed in a mold, frozen at -70 °C and freeze-dried. Then the composite was sintered at 1200 °C. After a reinfiltration with zirconium butoxide solution, sintering was performed at 1200 °C. As can be seen from Fig. 3, the flexural strength was about 90 MPa. The microstructure was homogeneous and the fracture behavior was damage-tolerant.

## Claims

1. A process for the production of an oxide ceramic fiber preform, comprising the steps of:
a1) arranging a plurality of oxide ceramic fiber bundles with a length of 3 to 70 mm in a desired shape;
b1) infiltrating the fiber bundles with a liquid binder composition having a viscosity of 1 to 100 mPa·s;
c1) compacting the arrangement of fiber bundles;
d1) allowing the liquid binder composition infiltrated into the arrangement of fiber bundles to form bonds between the fiber bundles while the arrangement is kept in a compacted state to obtain an oxide ceramic fiber preform containing a plurality of oxide ceramic fiber bundles bonded together by a binder.

2. The process of claim 1, comprising the step of removing liquid binder composition not adhering to the fiber bundles.

3. The process of claim 1 or 2, wherein the oxide ceramic fibers comprise an oxide selected from Al₂O₃, SiO₂, ZrO₂, Y₂O₃, or a combination thereof.

4. The process of any of claims 1 to 3, wherein the oxide ceramic fiber bundles are arranged in step a1) with an at least two-dimensional random orientation of their long axis.

5. The process of any of claims 1 to 4, wherein at least the steps a1), b1) and c1) use a perforated mold or a perforated support in order to arrange the fiber bundles, and to infiltrate and compact the arrangement.

6. The process of any of claims 1 to 5, wherein the liquid binder composition comprises a ceramic binder or a precursor thereof.

7. The process of claim 6, wherein the step of forming bonds between the fiber bundles involves a heat treatment at a temperature of 300 to < 1000 °C.

8. The process of any of claims 1 to 7, wherein the liquid binder composition comprises a polymeric organic binder or a precursor thereof.

9. The process of any of claims 1 to 8, wherein the content of the binder in the oxide ceramic fiber preform obtained from step d1) is 2 % by weight or less, based on the total weight of the preform.

10. The process of any of claims 1 to 9, wherein the oxide ceramic fiber preform obtained from step d1) has a content of oxide ceramic fibers of 20 to 60 % by volume, based on the total volume of the preform.

11. A process for the production of an oxide ceramic matrix composite material comprising the steps of:
a2) providing an oxide ceramic fiber preform using the process of any of claims 1 to 10;
b2) infiltrating the oxide ceramic fiber preform with an oxide ceramic slurry; and
c2) drying and sintering the oxide ceramic fiber preform infiltrated with the ceramic slurry to obtain an oxide ceramic matrix composite material containing a plurality of oxide ceramic fiber bundles with a length of 3 to 70 mm.

12. The process of claim 11, wherein the ceramic particles in the oxide ceramic slurry have an average particle size of 3 µm or less.

13. The process of claim 11 or 12, wherein the particle size distribution of the ceramic particles in the oxide ceramic slurry is a bimodal distribution with a peak in the range of 0.08 to 0.20 µm and a peak in the range of 0.8 to 2 µm.

## Patentansprüche

1. Ein Verfahren zur Herstellung einer oxidkeramischen Faserpreform, umfassend die Schritte:
a1) Anordnen einer Vielzahl oxidkeramischer Faserbündel mit einer Länge von 3 bis 70 mm in einer gewünschten Form;
b1) Infiltrieren der Faserbündel mit einer flüssigen Bindemittelzusammensetzung mit einer Viskosität von 1 bis 100 mPa·s;
c1) Verdichten der Faserbündelanordnung;
d1) Ermöglichen, dass die flüssige Bindemittelzusammensetzung, mit der die Faserbündelanordnung imprägniert ist, Bindungen zwischen den Faserbündeln ausbildet, während die Anordnung in einem verdichteten Zustand gehalten wird, um eine oxidkeramische Faserpreform zu erhalten, die eine Vielzahl oxidkeramischer Faserbündel enthält, die mit Hilfe eines Bindemittels aneinander gebunden sind.

2. Das Verfahren nach Anspruch 1, umfassend den Schritt des Entfernens flüssiger Bindemittelzusammensetzung, die nicht an den Faserbündeln haftet.

3. Das Verfahren nach Anspruch 1 oder 2, wobei die oxidkeramischen Fasern ein Oxid, ausgewählt aus Al₂O₃, SiO₂, ZrO₂, Y₂O₃ oder einer Kombination davon, umfassen.

4. Das Verfahren nach einem der Ansprüche 1 bis 3, wobei die oxidkeramischen Faserbündel in Schritt a1) mit einer mindestens zweidimensional zufälligen Ausrichtung ihrer Längsachse angeordnet sind.

5. Das Verfahren nach einem der Ansprüche 1 bis 4, wobei mindestens die Schritte a1), b1) und c1) eine perforierte Form oder einen perforierten Träger verwenden, um die Faserbündel anzuordnen und die Anordnung zu imprägnieren und zu verdichten.

6. Das Verfahren nach einem der Ansprüche 1 bis 5, wobei die flüssige Bindemittelzusammensetzung ein keramisches Bindemittel oder einen Vorläufer davon umfasst.

7. Das Verfahren nach Anspruch 6, wobei der Schritt des Ausbildens von Bindungen zwischen den Faserbündeln eine Wärmebehandlung bei einer Temperatur von 300 bis < 1000°C beinhaltet.

8. Das Verfahren nach einem der Ansprüche 1 bis 7, wobei die flüssige Bindemittelzusammensetzung ein polymeres organisches Bindemittel oder einen Vorläufer davon umfasst.

9. Das Verfahren nach einem der Ansprüche 1 bis 8, wobei der Gehalt des Bindemittels in der aus Schritt d1) erhaltenen oxidkeramischen Faserpreform 2 Gew.-% oder weniger, bezogen auf das Gesamtgewicht der Preform, beträgt.

10. Das Verfahren nach einem der Ansprüche 1 bis 9, wobei die aus Schritt d1) erhaltene oxidkeramische Faserpreform einen Gehalt an oxidkeramischen Fasern von 20 bis 60 Volumen-%, bezogen auf das Gesamtvolumen der Preform, aufweist.

11. Ein Verfahren zur Herstellung eines oxidkeramischen Matrix-Verbundmaterials, umfassend die Schritte:
a2) Bereitstellen einer oxidkeramischen Faserpreform unter Verwendung des Verfahrens nach einem der Ansprüche 1 bis 10;
b2) Infiltrieren der oxidkeramischen Faserpreform mit einer oxidkeramischen Suspension; und
c2) Trocknen und Sintern der mit der keramischen Suspension getränkten oxidkeramischen Faserpreform, um ein oxidkeramisches Matrix-Verbundmaterial zu erhalten, das eine Vielzahl oxidkeramischer Faserbündel mit einer Länge von 3 bis 70 mm enthält.

12. Das Verfahren nach Anspruch 11, wobei die Keramikteilchen in der oxidkeramischen Suspension eine mittlere Teilchengröße von 3 µm oder weniger aufweisen.

13. Das Verfahren nach Anspruch 11 oder 12, wobei es sich bei der Teilchengrößenverteilung der Keramikteilchen in der oxidkeramischen Suspension um eine bimodale Verteilung mit einem Peak im Bereich von 0,08 bis 0,20 µm und einem Peak im Bereich von 0,8 bis 2 µm handelt.

## Revendications

1. Procédé pour la production d'une ébauche de fibres en céramique de type oxyde, comprenant les étapes consistant à :
a1) agencer sous une forme souhaitée une pluralité de faisceaux de fibres en céramique de type oxyde ayant une longueur de 3 à 70 mm ;
b1) infiltrer les faisceaux de fibres avec une composition liante liquide ayant une viscosité de 1 à 100 mPa·s ;
c1) compacter l'agencement de faisceaux de fibres ;
d1) laisser la composition liante liquide infiltrée dans l'agencement de faisceaux de fibres former des liaisons entre les faisceaux de fibres cependant que l'agencement est maintenu dans un état compacté pour obtenir une préforme de fibres en céramique de type oxyde contenant une pluralité de faisceaux de fibres en céramique de type oxyde liés ensemble par un liant.

2. Procédé selon la revendication 1, comprenant l'étape consistant à éliminer la composition liante liquide n'adhérant pas aux faisceaux de fibres.

3. Procédé selon la revendication 1 ou 2, dans lequel les fibres en céramique de type oxyde comprennent un oxyde sélectionné parmi Al₂O₃, SiO₂, ZrO₂, Y₂O₃, ou une combinaison de ceux-ci.

4. Procédé selon l'une quelconque des revendications 1 à 3, dans lequel les faisceaux de fibres en céramique de type oxyde sont agencés dans l'étape a1) avec une orientation aléatoire bidimensionnelle de leur axe long.

5. Procédé selon l'une quelconque des revendications 1 à 4, dans lequel au moins les étapes a1), b1) et c1) utilisent un moule perforé ou un support perforé afin que les faisceaux de fibres soient agencés, et que l'agencement soit infiltré et compacté.

6. Procédé selon l'une quelconque des revendications 1 à 5, dans lequel la composition liante liquide comprend un liant céramique ou un précurseur de celui-ci.

7. Procédé selon la revendication 6, dans lequel l'étape de formation de liaisons entre les faisceaux de fibres met en jeu un traitement thermique à une température de 300 à moins de 1 000 °C.

8. Procédé selon l'une quelconque des revendications 1 à 7, dans lequel la composition liante liquide comprend un liant organique polymère ou un précurseur de celui-ci.

9. Procédé selon l'une quelconque des revendications 1 à 8, dans lequel la teneur en le liant dans la préforme de fibres en céramique de type oxyde obtenue dans l'étape d1) est de 2 % en poids ou moins par rapport au poids total de la préforme.

10. Procédé selon l'une quelconque des revendications 1 à 9, dans lequel la préforme de fibres en céramique de type oxyde obtenue dans l'étape d1) a une teneur en fibres en céramique de type oxyde de 20 à 60 % en volume par rapport au volume total de la préforme.

11. Procédé pour la production d'un matériau composite de matrice en céramique de type oxyde, comprenant les étapes consistant à :
a2) fournir une préforme de fibres en céramique de type oxyde en utilisant le procédé de l'une quelconque des revendications 1 à 10 ;
b2) infiltrer la préforme de fibres en céramique de type oxyde avec une bouillie de céramique de type oxyde ; et
c2) sécher et fritter la préforme en fibres de céramique de type oxyde infiltrée avec la bouillie de céramique pour obtenir un matériau composite de matrice en céramique de type oxyde contenant une pluralité de faisceaux de fibres en céramique de type oxyde ayant une longueur de 3 à 70 mm.

12. Procédé selon la revendication 11, dans lequel les particules en céramique dans la bouillie de céramique de type oxyde ont une granulométrie moyenne de 3 µm ou moins.

13. Procédé selon la revendication 11 ou 12, dans lequel la distribution de granulométrie des particules en céramique dans la bouillie en céramique de type oxyde est une distribution bimodale avec un pic situé dans la plage allant de 0,08 à 0,20 µm et un pic situé dans la plage allant de 0,8 à 2 µm.
